# EUROPEAN PATENT APPLICATION

(11) **EP 4 123 524 A1**
(43) Date of publication of application: **25.01.2023**
(21) Application number: 21198315.0
(22) Date of filing: 22.09.2021
(51) Int. Cl.: G06Q 10/04

(54) **METHOD AND DEVICE FOR DETERMINING TARGET PROPORTION OF COMPONENTS IN COMPOUND RECIPE**

(30) Priority: 22.07.2021 CN 202110830859
(71) Applicant: Covestro Deutschland AG, 51373 Leverkusen (DE)
(72) Inventor: GAO, Han, Shanghai, 201206 (CN); LIU, Wei, Shanghai, 201206 (CN)
(74) Representative: Levpat

(57) **Abstract**

The invention relates to a method for determining a target proportion of components in a compound recipe. The method comprises: a) encoding one or more initial proportions; b) generating one or more candidate proportions from the encoded one or more initial proportions through a genetic algorithm; c) predicting at least one attribute of a product corresponding to the one or more candidate proportions using a model, wherein the model is obtained through machine learning trained by a plurality of sets of training data, each set of the training data in the plurality of sets of training data comprises: one proportion of at least a part of the components and a tested result of the at least one attribute of the product corresponding to the proportion; and d) determining whether the predicted result of the at least one attribute of the product corresponding to the one or more candidate proportions meets a preset condition: if the preset condition is met, determining the one or more candidate proportions as the target proportion, otherwise, selecting at least one from the one or more initial proportions and the one or more candidate proportions to update the one or more initial proportions used to generate the one or more candidate proportions in the step b), and repeating the steps b) - d) until the predicted result meets the preset condition. The invention also relates to a system and a device for determining the target proportion of components in the compound recipe, and a computer storage medium.

## Description

### TECHNICAL FIELD

The present invention relates to the field of compound recipes, in particular to a method, a system, a device and a computer readable storage medium for determining a target proportion of components in a compound recipe.

### BACKGROUND

The proportions of the components in the compound recipe may greatly affect various attributes of the ultimately generated compound. In practical applications, it is often necessary to find appropriate proportions of components for known requirements of attributes. In the prior art, such a proportion is generally sought by means of manual tests. However, for known requirements of attributes, a substantial number of tests are generally required to adjust the proportions of the components, so as to ultimately determine the appropriate proportion for components. This tends to be very time consuming and costly, with great limitations.

In addition, the manual test for determining the proportion of components, to a large extend, relies on the individual experience of the tester. The manual test is conducted by synthesizing large numbers of samples and screening therefrom utilizing lattice search in an empirically determined sample space. Such a method, which completely relies on the manual test, will generally introduce the interference of human factor, and the time and cost of the entire operation are often difficult to predict and plan in advance.

Therefore, there is a need for an improved method for determining the target proportion of components in a compound recipe.

### SUMMARY

According to an aspect of the present invention, there is provided a method for determining a target proportion of components in a compound recipe. The method comprises: a) encoding one or more initial proportions; b) generating one or more candidate proportions from the one or more encoded initial proportions through a genetic algorithm; c) predicting at least one attribute of a product corresponding to the one or more candidate proportions using a model, wherein the model is obtained through machine learning trained by a plurality of sets of training data, each set of the training data in the plurality of sets of training data comprises: one proportion of at least a part of the components and a tested result of the at least one attribute of the product corresponding to the one proportion; and d) determining whether the predicted result of the at least one attribute of the product corresponding to the one or more candidate proportions meets a preset condition: if the preset condition is met, determining the one or more candidate proportions as the target proportion, otherwise, selecting at least one from the one or more initial proportions and the one or more candidate proportions to update the one or more initial proportions used to generate the one or more candidate proportions in the step b), and repeating the steps b) - d) until the predicted result meets the preset condition.

Alternatively or additionally, the method for determining a target proportion of components in a compound recipe according to an embodiment of the present invention further comprises: e) determining whether the tested result of the at least one attribute of the product corresponding to the target proportion meets the preset condition: if the preset condition is met, the target proportion is reserved; otherwise, taking the target proportion and the tested result of the at least one attribute of the product corresponding to the target proportion as a set of training data to further train the model.

Alternatively or additionally, in the method for determining a target proportion of components in a compound recipe according to an embodiment of the present invention, in the step d), when the preset condition comprises requirements for a plurality of attributes of the product, select at least one from the one or more initial proportions and the one or more candidate proportions using a Pareto-Frontier method to update the one or more initial proportions used to generate the one or more candidate proportions in the step b).

Alternatively or additionally, in the method for determining a target proportion of components in a compound recipe according to an embodiment of the present invention, the product comprises a dispersion, preferably a polyurethane dispersion. The attributes of the product comprise dispersion attributes, film attributes, and/or application attributes of the product.

Alternatively or additionally, in the method for determining a target proportion of components in a compound recipe according to an embodiment of the present invention, the dispersion attributes of the product comprise a solid content of the product, a particle size of the product, a viscosity of the product, a PH value of the product, and/or an LV10 molecular mass of the product; and/or the film properties of the product include a film elongation at break of the product, a film 100% modulus of the product, a tensile strength of the product, and/or a pendulum hardness of the product; and/or the application attributes of the product include a color fastness of the product, an anti-hydrolysis of the product, a water swelling of the product, and/or a gloss of the product.

Alternatively or additionally, in the method for determining a target proportion of components in a compound recipe according to an embodiment of the present invention, in the step a), the encoding is a binary encoding, a floating-point encoding, and/or a symbol encoding.

Alternatively or additionally, in the method for determining a target proportion of components in a compound recipe according to an embodiment of the present invention, in the step b), the genetic algorithm comprises generating the one or more candidate proportions from the encoded one or more initial proportions by crossover recombination and/or mutation.

Alternatively or additionally, in the method for determining a target proportion of components in a compound recipe according to an embodiment of the present invention, in the step b), a maximum value and a minimum value are set for the one or more candidate proportions of the components in the compound recipe.

According to another aspect of the present invention there is provided a device for determining a target proportion of components in a compound recipe. The device comprises: an encoding unit, configured to encode the one or more initial proportions; a candidate generation unit, configured to generate one or more candidate proportions from the encoded one or more initial proportions through a genetic algorithm; a prediction unit, configured to predict at least one attribute of a product corresponding to the one or more candidate proportions using a model, wherein the model is obtained through machine learning trained by a plurality of sets of training data, each set of the training data in the plurality of sets of training data comprises: one proportion of at least a part of the components and a tested result of the at least one attribute of the product corresponding to the proportion; and a first determining unit, configured to determine whether the predicted result of the at least one attribute of the product corresponding to the one or more candidate proportions meets a preset condition: if the preset condition is met, determining the one or more candidate proportions as the target proportion, otherwise, selecting at least one from the one or more initial proportions and the one or more candidate proportions to update the one or more initial proportions used to generate the one or more candidate proportions in the candidate generation unit, and repeating the steps in the candidate generation unit and the prediction unit until the predicted result meets the preset condition.

Alternatively or additionally, the device for determining a target proportion of components in a compound recipe according to an embodiment of the present invention further comprises: a second determining unit, configured to determine whether the tested result of the at least one attribute of the product corresponding to the target proportion meets the preset condition: if the preset condition is met, the target proportion is reserved; otherwise, taking the target proportion and the tested result of the at least one attribute of the product corresponding to the target proportion as a set of training data to further train the model.

Alternatively or additionally, in the device for determining a target proportion of components in a compound recipe according to an embodiment of the present invention, the first determination unit is further configured to, when the preset condition comprises requirements for a plurality of attributes of the product, select at least one from the one or more initial proportions and the one or more candidate proportions using a Pareto-Frontier method to update the one or more initial proportions used to generate the one or more candidate proportions in the step b).

Alternatively or additionally, in the device for determining a target proportion of components in a compound recipe according to an embodiment of the present invention, the attributes of the product comprise dispersion attributes, film attributes, and/or application attributes of the product.

Alternatively or additionally, in the device for determining a target proportion of components in a compound recipe according to an embodiment of the present invention, the dispersion attributes of the product comprise a solid content of the product, a particle size of the product, a viscosity of the product, a PH value of the product, and/or an LV10 molecular mass of the product; and/or the film attributes of the product comprise a film elongation at break of the product, a film 100% modulus of the product, a tensile strength of the product, and/or a pendulum hardness of the product; and/or the application attributes of the product include a color fastness of the product, an anti-hydrolysis of the product, a water swelling of the product, and/or a gloss of the product.

Alternatively or additionally, in the device for determining a target proportion of components in a compound recipe according to an embodiment of the present invention, in the encoding unit, the encoding is a binary encoding, a floating-point encoding, and/or a symbol encoding.

Alternatively or additionally, in the device for determining a target proportion of components in a compound recipe according to an embodiment of the present invention, in the candidate generation unit, the genetic algorithm comprises generating the one or more candidate proportions from the encoded one or more initial proportions by crossover recombination and/or mutation.

Alternatively or additionally, in the device for determining a target proportion of components in a compound recipe according to an embodiment of the present invention, the candidate generation unit is further configured to set a maximum value and a minimum value for the one or more candidate proportions of the components in the compound recipe.

According to still another aspect of the present invention, there is provided a system for determining a target recipe of a compound, comprising: a computer processor, a computer readable storage medium, program instructions stored on the computer readable storage medium, the program instructions when executed by the computer processor perform the method described above.

According to yet another aspect of the present invention, there is provided a computer-readable storage medium having instructions thereon that, when executed by at least one processor, cause the at least one processor to execute the method described above.

According to one aspect of the present invention, the combination of the machine learning model and the genetic algorithm will substantially reduce the labor cost and time cost required to determine the proportion of the compound recipe.

### BRIEF DESCRIPTION OF THE DRAWINGS

The above and other objects and advantages of the present invention will become more complete and apparent from the following detailed description taken in conjunction with the accompanying drawings.
FIG. 1 illustrates a flow diagram of a method 1000 for determining a target proportion of components in a compound recipe according to an embodiment of the present invention.
FIG. 2 illustrates a diagram for selecting an appropriate proportion from the initial proportions and the candidate proportions using the Pareto-Frontier Optimization method to update the initial proportions, according to an embodiment of the present invention.
FIG. 3 illustrates a block diagram of a device 3000 for determining a target proportion of components in a compound recipe according to an embodiment of the present invention.

### DETAILED DESCRIPTION

It is to be noted that the terms "first", "second" and the like herein are used for distinguishing between similar objects and are not necessarily for describing the order of objects in terms of time, space, size and the like. Furthermore, the terms "comprise", "include," and the like herein are intended to represent a non-exclusive inclusion, unless specifically indicated otherwise.

First, according to the design idea of the present invention, there is provided a method for determining a target proportion of components in a compound recipe. The method comprises: a) encoding one or more initial proportions; b) generating one or more candidate proportions from the one or more encoded initial proportions through a genetic algorithm; c) predicting at least one attribute of a product corresponding to the one or more candidate proportions using a model, wherein the model is obtained through machine learning trained by a plurality of sets of training data, each set of the training data in the plurality of sets of training data comprises: one proportion of at least a part of the components and a tested result of the at least one attribute of the product corresponding to the one proportion; and d) determining whether the predicted result of the at least one attribute of the product corresponding to the one or more candidate proportions meets a preset condition: if the preset condition is met, determining the one or more candidate proportions as the target proportion, otherwise, selecting at least one from the one or more initial proportions and the one or more candidate proportions to update the one or more initial proportions used to generate the one or more candidate proportions in the step b), and repeating the steps b) - d) until the predicted result meets the preset condition.

Hereinafter, various exemplary embodiments according to the present invention will be described in detail with reference to the drawings.

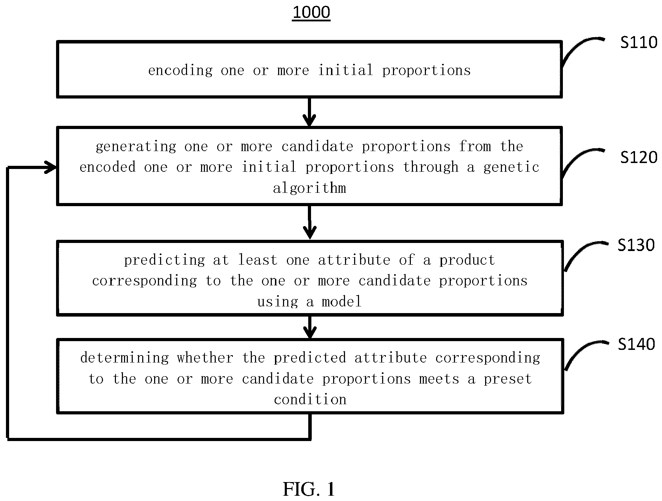

FIG. 1 illustrates a flow diagram of a method 1000 for determining a target proportion of components in a compound recipe according to an embodiment of the present invention. It is known that the recipe of Compound A includes 12 components (as shown in Table 1). The target proportion of the components required to prepare Compound A meeting the preset conditions is determined by method 1000.

At step S110, the initial proportions of 12 components in the recipe of Compound A are encoded. The initial proportion here may be randomly determined, may be empirically determined, or may be determined according to any other suitable manner. Table 1 shows an example of encoding the initial proportions of the 12 components of Compound A with binary encoding. At step Sill, the maximum value and the minimum value of the target proportion of the components in the recipe are determined. Taking Component 1 as an example, it has a maximum value of 85% and a minimum value of 5%. The maximum and minimum values for the components may be determined from historical data, empirical values, databases, or the like. At step S112, a suitable length of binary encoding is allocated to the components. Taking Component 1 as an example, a length of 4 bits is allocated for its encoding. Generally, the longer the encoding length allocated to a component, the more potential encoded binary values can be used for that component, i.e., the higher encoding precision is provided for the component. For example, for Component 1, if a 4-bit binary encoding length is allocated, the number of potential values for the proportion of Component 1 is 16; in contrast, for Component 3, if a 3-bit binary encoding length is allocated, the number of potential values for the proportion of Component 3 is 8. Optionally, components with relatively large differences between maximum and minimum values are allocated with relatively larger encoding lengths, while components with relatively small differences between maximum and minimum values are allocated with relatively shorter encoding lengths. For example, Component 1 with a difference of 80% between maximum and minimum values is allocated with a 4-bit binary length, while Component 3 with a difference of 10% is allocated with a 3-bit binary length. At step S113, each initial component is converted into a binary form. Still taking Component 1 as an example, an initial proportion of 15.7% is converted into a 4-bit binary number of 0010. Similarly, binary encoded is applied to the proportions of the other components in Compound A.

Note that, the encoding of the initial proportion is not intended to be limited to binary encoding in the present invention, but may be any form of encoding appropriate for the genetic algorithm in the subsequent steps, such as floating-point encoding, symbol encoding, etc.

**Table 1 Components and Binary Encoding of Compound A**

| | Minimum Value ( %) | Maximum Value ( %) | Binary Length | Number of Potential Values | Initial Proportion (%) | Encoded Initial Proportion |
|---|---|---|---|---|---|---|
| Component 1 | 5 | 85 | 4 | 16 | 15.7 | 0010 |
| Component 2 | 5 | 85 | 4 | 16 | 31.7 | 0101 |
| Component 3 | 0 | 10 | 3 | 8 | 7.1 | 101 |
| Component 4 | 0 | 5 | 2 | 4 | 3.3 | 10 |
| Component 5 | 0 | 50 | 3 | 8 | 7.1 | 001 |
| Component 6 | 0 | 50 | 3 | 8 | 21.4 | 011 |
| Component 7 | 0 | 10 | 3 | 8 | 7.1 | 101 |
| Component 8 | 0 | 5 | 2 | 4 | 3.3 | 10 |
| Component 9 | 0 | 10 | 3 | 8 | 1.4 | 001 |
| Component 10 | 0 | 1 | 2 | 4 | 1.0 | 11 |
| Component 11 | 0 | 3 | 2 | 4 | 1.0 | 01 |
| Component 12 | 0 | 1.5 | 3 | 8 | 1.0 | 00 |

At step S120, candidate proportions of the 12 components in the Compound A are generated from the encoded initial proportions through a genetic algorithm. Optionally, candidate proportions are generated by operations such as crossover recombination, mutation, and the like.

For example, as shown in Table 2, the Initial Proportion 1 is generated from a Candidate Proportion 1 by mutation. Specifically, the proportion of Component 3 is mutated from 101 to 001, and the proportion of Component 5 is mutated from 001 to 100.

In another example, Candidate Proportion 2 and Candidate Proportion3 are generated from Initial Proportion 1 and Initial Proportion 2 by crossover recombination. Specifically, the values of Initial Proportion 1 of Components 1-3 are recombined with the values of Initial Proportion 2 of Components 4-12 to obtain a Candidate Proportion 2; the values of Initial Proportion 1 of Components 4-12 are recombined with the values of Initial Proportion 2 of Components 1-3 to obtain a Candidate Proportion 3.

**Table 2 Proportion of Component and Predicted Attribute for Compound A**

| | Initial Proportion 1 | Initial Proportion 2 | Candidate Proportion 1 | Candidate Proportion 2 | Candidate Proportion 3 |
|---|---|---|---|---|---|
| Component 1 | 0010 | 0001 | 0010 | 0010 | 0001 |
| Component 2 | 0101 | 0101 | 0101 | 0101 | 0101 |
| Component 3 | 101 | 010 | 001 | 101 | 010 |
| Component 4 | 10 | 00 | 10 | 10 | 00 |
| Component 5 | 001 | 100 | 100 | 001 | 100 |
| Component 6 | 011 | 001 | 011 | 011 | 001 |
| Component 7 | 101 | 001 | 101 | 101 | 001 |
| Component 8 | 10 | 00 | 10 | 10 | 00 |
| Component 9 | 001 | 100 | 001 | 001 | 100 |
| Component 10 | 11 | 00 | 11 | 11 | 00 |
| Component 11 | 01 | 10 | 01 | 01 | 10 |
| Component 12 | 00 | 00 | 00 | 00 | 00 |
| Attribute 1 (nm) | 120.3 | 111.6 | - | 100.5 | 153.4 |
| Attribute 2 (Mpa) | 1.3 | 1.2 | - | 1.4 | 0.3 |

At step S130, at least one attribute of the product corresponding to the candidate proportions (e.g., Candidate Proportion 1, Candidate Proportion 2 or Candidate Proportion 3) is predicted using a model.

In the context of the present invention, the term "attribute" of the reaction product may be any indicator of the reaction product capable of embodying a particular property of the product, such as a dispersion attribute, a film attribute, an application attribute, or the like. The dispersion attributes of the reaction product herein include, but are not limited to, the solid content, the particle size, the viscosity, the PH value and the LV10 molecular mass of the product. The film attributes of the reaction product include, but are not limited to, film elongation at break, film 100% modulus, tensile strength, pendulum hardness of the product. The application attributes of the reaction product include, but are not limited to, color fastness, anti-hydrolysis, water swelling, gloss of the product.

At step S130, the prediction model is obtained through machine learning trained by a plurality of sets of training data. The model can be used to simulate a reaction of preparing a compound, thereby predicting various attributes of the reaction product corresponding to a given proportion. Each set of training data herein comprises one recipe proportion of at least a part of the 12 components in the compound A and tested attribute of the product corresponding to the proportion. One recipe proportion in a set of training data is a recipe proportion that has undergone a practical manual test, so that the practically tested attributes of the product can be learned from the manual test. Such a recipe proportion may include all 12 components of Compound A, or may include a portion of the 12 components of Compound A. In one example, a reaction of preparing a compound may be simulated by the following steps: determining the reaction molecule contained in the components in the recipe; determining a functional group corresponding to each reaction molecule; allocating a type of functional group for each functional group; determining a reaction rule corresponding to each type of functional group; and obtaining the attribute of the reaction product by simulating reactions of preparing a compound from reaction molecules in the recipe (i.e., components in the recipe) based on these reaction rules.

At step S140, whether the predicted attribute of the product corresponding to the candidate proportion at step S130 meets a preset condition is determined. If the preset condition is met, take the candidate proportion as the target proportion of the 12 components in the Compound A recipe. If the preset condition is not met, select at least one proportion from the initial proportions obtained through encoding in the step S110 and the candidate proportions obtained through the genetic algorithm in the step S120 to update the initial proportions used for generating the candidate proportions in the step S120, and repeat the steps S120-S140 until the predicted attribute meets the preset condition.

In the context of the present invention, the term "preset condition" is intended to represent a condition that is preset for at least one attribute of the reaction product. For example, in the example shown in Table 2, the preset conditions are that Attribute 1 (i.e., particle size) is not greater than 80 nm, and the film 100% modulus lies in 2-3Mpa. As can be seen from Table 2, neither the Candidate Proportion 2 nor the Candidate proportion 3 obtained by crossover recombination from the Initial Proportion 1 and the Initial Proportion 2 meets the preset condition. Specifically, neither the Attribute 1 of the Candidate Proportions 2 and 3 is less than a preset maximum value of 80 nm, and neither the Attribute 2 of the Candidate Proportions 2 and 3 falls into a preset interval of 2-3 Mpa. Therefore, at least one of the Initial Proportions 1 and 2 and the Candidate Proportions 2 and 3 needs to be selected to update the initial proportions used to generate the candidate proportions at step S120. For example, the proportions whose corresponding attribute are closest to the preset condition is selected to update the initial proportions. And, the steps S120-S140 are repeated until the predicted attribute of the reaction product meets the preset condition.

At step S140, if the preset condition includes requirements for a plurality of attributes of the product, the initial proportions used to generate the candidate proportions at step S120 may be updated by selecting appropriate proportions from the initial proportions and the candidate proportions using a Pareto-Frontier Pareto optimization algorithm. The efficiency of the determination of the target recipe can be further improved through a Pareto optimization algorithm.

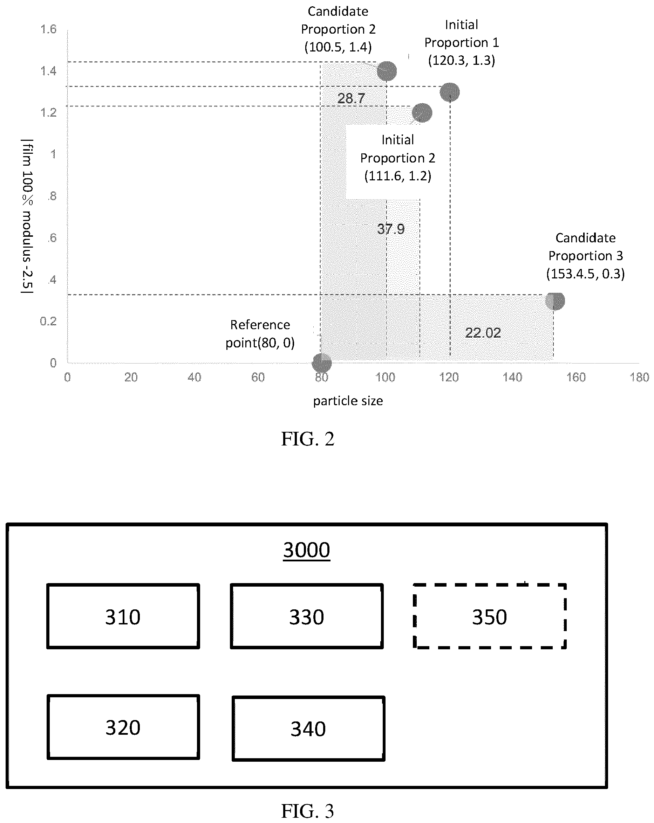

Continuing to take the Initial Proportions 1 and 2 and the Candidate Proportions 2 and 3 in Table 2 as an example in the following, reference is made to FIG. 2 to illustrate how to update the initial proportions at step S120 by selecting two appropriate proportions from the these four proportions based on a preset condition involving two attributes, thereby generating the next-generation candidate proportions by crossover recombination of the two selected proportions at step S120.

First, plot these four proportions to be selected in a reference system with the particle size of the reaction product (i.e., Attribute 1) as the abscissa and the deviation of the film 100% modulus from the preset condition of 2.5 Mpa (i.e., Attribute 2) as the ordinate. The reference point (80, 0) is determined according to preset conditions (i.e. particle size ≤ 80 nm and film 100% modulus is between 2-3 Mpa). As can be seen from FIG. 2, a rectangle can be formed by the point corresponding to each proportion and the reference point. The two optimal proportions, namely the two proportions that can form a rectangle of minimum area with the reference point, are selected from the four proportions.

In FIG. 2, since the Initial Proportion 2 is located inside the rectangle formed by the Initial Proportion 1 and the reference point, the area of the rectangle formed between the Initial Proportion 2 and the reference point is necessarily smaller than that between the Initial Proportion 1 and the reference point. This may also be referred to as the Initial Proportion 1 is dominated by the Initial Proportion 2, i.e. the Initial Proportion 2 is superior to the Initial Proportion 1. The areas of the rectangular formed between the Candidate Proportion 2, the Candidate Proportion 3, the Initial Proportion 2 and the reference point are calculated respectively, which are 37.9 for the Initial Proportion 2, 28.7 for the Candidate Proportion 2, and 22.02 for the Candidate Proportion 3. It follows that Candidate Proportion 3 is superior to the Candidate Proportion 2, and the Candidate Proportion 2 is superior to the Initial Proportion 2. Therefore, the two optimal proportions of the four proportions are the Candidate Proportions 2 and 3.

Although not shown in FIG. 1, the method 1000 for determining target proportion of components in a compound recipe may further include step S150. At step S150, determine whether the practically tested attribute of the reaction product obtained in the practical test corresponding to the target proportion determined in the step S140 also meets the preset condition. If the practically tested attribute also meets the preset condition, the target proportion is reserved; otherwise, input the target proportion and the practically tested result of its attribute as a set of training data to the machine learning model, and continue to train the model. Thus, whether the target proportion selected based on the prediction of the machine learning model meets the requirements is verified through practical tests.

While the various steps are shown as being performed in succession in a particular order in FIG. 1, such order is merely exemplary and the present invention is not intended to limit the order between the steps illustrated in FIG. 1. For example, two steps shown in succession may, in fact, be performed substantially concurrently, or some steps may sometimes be performed in the reverse order, depending upon the functionality or operation involved in the steps.

FIG. 3 illustrates a block diagram of a device 3000 for determining a target proportion of components in a compound recipe according to an embodiment of the present invention. The device 3000 includes an encoding unit 310, a candidate generation unit 320, a prediction unit 330, and a first determination unit 340.

Encoding unit 310 is configured to encode the initial proportion(s) of the components in the compound recipe. Similarly as described above, the "initial proportion" here may be randomly determined, may be empirically determined, or may be determined according to any other suitable manner; the "encoding" here may be binary encoding, or may be any form of encoding suitable for the genetic algorithm applied in the device 3000, such as floating-point encoding, symbol encoding, or the like.

The candidate generation unit 320 is configured to generate, by means of a genetic algorithm, candidate proportion(s) of the components in the compound recipe from the initial proportion(s) encoded by the encoding unit 320. For example, candidate proportion(s) is generated by operation such as crossover recombination, mutation, and the like in a genetic algorithm.

The prediction unit 330 is configured to predict attributes of the product corresponding to the candidate proportion(s) generated in the candidate generation unit 320 using a model. Similarly as described above, the attributes of the reaction product may be, for example, any indicator of the reaction product, such as dispersion attributes, film attributes, application attributes, etc., capable of embodying a particular property of the product.

The model used in the prediction unit 330 is obtained through machine learning trained by a plurality of sets of training data. Wherein each set of training data in the plurality of sets of training data comprises a proportion of components and a practically tested result of at least one attribute of a product corresponding to the proportion.

The first determination unit 340 is configured to determine whether the predicted result of the at least one attribute of the product corresponding to the candidate proportion in the prediction unit 330 meets a preset condition. If the preset condition is met, the candidate proportion is determined as a target proportion of the components in the compound recipe; otherwise, at least one proportion is selected from the initial proportion(s) and the candidate proportion(s) to update the initial proportion(s) in the candidate generation unit 320, and the above steps are repeated until the predicted result meets the preset condition. As previously mentioned, the preset conditions include conditions that are preset for at least one attribute of the reaction product. For example, the particle size of the product cannot exceed 80 nm, the film 100% modulus of the product is between 2-3 Mpa, and the like.

The device 3000 may further comprise a second determination unit 350 (shown in dashed block) configured to determine whether the tested result of the at least one attribute of the product corresponding the target proportion also meets the preset condition. If the preset condition is met, the target proportion is retained; otherwise, take the target proportion and the tested result of the attribute of the reaction product corresponding to the target proportion as a set of training data to further train the model, so that the accuracy of the model is improved. Thus, whether the predicted result of the machine learning model in the prediction unit 330 meets the tested result is verified by a practical test.

According to one embodiment of the present invention, the first determination unit 340 may be further configured to update the initial proportion(s) in the candidate generation unit 320 by selecting at least one proportion from the initial proportion(s) and the candidate proportion(s) using a Pareto-Frontier Pareto Optimization method when the preset condition includes requirements for a plurality of attributes of the product. For example, referring to FIG. 2, the initial proportions in the candidate generation unit 320 may be updated by selecting two optimal proportions from the Initial Proportions 1 and 2 and the Candidate Proportions 2 and 3 based on the Attribute 1 and the Attribute 2 through a Pareto-Frontier Pareto optimization method, thereby generating a next-generation of candidate proportions by crossover recombination in the candidate generation unit 320.

Some of the blocks shown in FIG. 3 are functional entities and do not necessarily correspond to physically or logically separate entities. These functional entities may be implemented in software, or in one or more hardware modules or integrated circuits, or in different network and/or processor devices and/or microcontroller devices.

It should be understand that the method for determining target proportion of components in a compound recipe according to the aforementioned embodiments of the present invention can be implemented by a computer program. The computer programs may take the form of instructions stored on a computer storage medium. By way of example, such computer storage medium may comprise RAM, ROM, EPROM, EEPROM, or optical disk storage, magnetic disk storage or other magnetic storage devices, or any other medium that can be used to carry or store desired program code in the form of machine-executable instructions or data structures and that can be accessed by a processor. The processor is capable of executing instructions stored on the computer storage medium, so as to implement the method for determining the target proportion of the components in the compound recipe according to the aforementioned embodiments of the present invention.

In sum, according to the technical solution of the present invention, the reaction of the compound is simulated by use of the machine learning model, so that a large amount of manual tests are not needed any more, thereby saving time and labor cost greatly. For example, in the example of Table 2, if 16 values of Component 1 are tested, 16 values of Component 2 are tested, ..., and 8 values of Component 12 are tested, then 16 ^{∗} 16 ^{∗} 8 ^{∗} 4 ^{∗} 8 ^{∗} 8 ^{∗} 8 ^{∗} 4 ^{∗} 8 ^{∗} 4 ^{∗} 8 = 17179869184 manual tests are required in conventional method to find the target recipe with manual test; while with the technical scheme of the present invention, only during the verification of the predicted result, the manual tests are required.

Further, by virtue of determining the candidate proportions through a genetic algorithm, the number of recipes needed to be predicted by a machine learning model is reduced, making it possible to determine a proper target recipe quickly, and improving the prediction efficiency. Furthermore, according to the technical solution of the present invention, a Pareto optimization algorithm is used for balancing the preset conditions of the multiple attributes, thus further improving the efficiency of predicting the target recipe. In the example of Table 2, if predictions are made for all possible recipes, 17179869184 recipe predictions need to be made with the machine learning model; however, according to the proposed solution of the present invention, by virtue of the genetic algorithm and Pareto optimization, only 2000 iterations (in which approximately 40,000 recipe predictions were performed using the machine learning model) are performed to determine the target recipe that meets the preset condition.

In addition, according to the technical solution of the present invention, the prediction result of the machine learning model is verified through manual tested data, and the accuracy of the target proportion finally determined is improved.

Although only some of the embodiments of the present invention have been described above, those of ordinary skill in the art will appreciate that the present invention may be embodied in many other forms without departing from the spirit and scope thereof. Accordingly, the illustrated examples and embodiments are to be regarded in an illustrative rather than a restrictive sense, and the invention may cover various modifications and alternatives without departing from the spirit and scope of the invention, as defined by the appended claims.

## Claims

1. A method for determining a target proportion of components in a compound recipe, **characterized in that**, the method comprises:
a) encoding one or more initial proportions;
b) generating one or more candidate proportions from the one or more encoded initial proportions through a genetic algorithm;
c) predicting at least one attribute of a product corresponding to the one or more candidate proportions using a model,
wherein the model is obtained through machine learning trained by a plurality of sets of training data, each set of the training data in the plurality of sets of training data comprises: one proportion of at least a part of the components and a tested result of the at least one attribute of the product corresponding to the one proportion; and
d) determining whether the predicted result of the at least one attribute of the product corresponding to the one or more candidate proportions meets a preset condition:
if the preset condition is met, determining the one or more candidate proportions as the target proportion,
otherwise, selecting at least one from the one or more initial proportions and the one or more candidate proportions to update the one or more initial proportions used to generate the one or more candidate proportions in the step b), and repeating the steps b) - d) until the predicted result meets the preset condition.

2. The method of claim 1, further comprising:
e) determining whether the tested result of the at least one attribute of the product corresponding to the target proportion meets the preset condition:
if the preset condition is met, the target proportion is reserved;
otherwise, taking the target proportion and the tested result of the at least one attribute of the product corresponding to the target proportion as a set of training data to further train the model.

3. The method of claim 1 or 2, wherein
in the step d), when the preset condition comprises requirements for a plurality of attributes of the product, select at least one from the one or more initial proportions and the one or more candidate proportions using a Pareto-Frontier method to update the one or more initial proportions used to generate the one or more candidate proportions in the step b).

4. The method of one of claims 1 to 3, wherein
the attributes of the product comprise dispersion attributes, film attributes, and/or application attributes of the product.

5. The method of claim 4, wherein
the dispersion attributes of the product comprise a solid content of the product, a particle size of the product, a viscosity of the product, a PH value of the product, and/or an LV10 molecular mass of the product; and/or
the film attributes of the product include a film elongation at break of the product, a film 100% modulus of the product, a tensile strength of the product, and/or a pendulum hardness of the product; and/or
the application attributes of the product include a color fastness of the product, an anti-hydrolysis of the product, a water swelling of the product, and/or a gloss of the product.

6. The method of one of claims 1 to 5, wherein
in the step a), the encoding is a binary encoding, a floating-point encoding, and/or a symbol encoding.

7. The method of one of claims 1 to 6, wherein
in the step b), the genetic algorithm comprises generating the one or more candidate proportions from the encoded one or more initial proportions by crossover recombination and/or mutation.

8. The method of one of claims 1 to 7, wherein
in the step b), a maximum value and a minimum value are set for the one or more candidate proportions of the components in the compound recipe.

9. A device for determining a target proportion of components in a compound recipe, **characterized in that**, the device comprises:
an encoding unit, configured to encode the one or more initial proportions;
a candidate generation unit, configured to generate one or more candidate proportions from the encoded one or more initial proportions through a genetic algorithm, the genetic algorithm preferably comprising generating the one or more candidate proportions from the encoded one or more initial proportions by crossover recombination and/or mutation;
a prediction unit, configured to predict at least one attribute of a product corresponding to the one or more candidate proportions using a model, the at least one attribute of a product preferably comprising dispersion attributes, film attributes, and/or application attributes of the product,
wherein the model is obtained through machine learning trained by a plurality of sets of training data, each set of the training data in the plurality of sets of training data comprises: one proportion of at least a part of the components and a tested result of the at least one attribute of the product corresponding to the proportion; and
a first determining unit, configured to determine whether the predicted result of the at least one attribute of the product corresponding to the one or more candidate proportions meets a preset condition:
if the preset condition is met, determining the one or more candidate proportions as the target proportion,
otherwise, selecting at least one from the one or more initial proportions and the one or more candidate proportions to update the one or more initial proportions used to generate the one or more candidate proportions in the candidate generation unit, and repeating the steps in the candidate generation unit and the prediction unit until the predicted result meets the preset condition.

10. The device of claim 9, further comprising:
a second determining unit, configured to determine whether the tested result of the at least one attribute of the product corresponding to the target proportion meets the preset condition:
if the preset condition is met, the target proportion is reserved;
otherwise, taking the target proportion and the tested result of the at least one attribute of the product corresponding to the target proportion as a set of training data to further train the model.

11. The device of claim 9 or 10, wherein
the first determination unit is further configured to, when the preset condition comprises requirements for a plurality of attributes of the product, select at least one from the one or more initial proportions and the one or more candidate proportions using a Pareto-Frontier method to update the one or more initial proportions used to generate the one or more candidate proportions through the genetic algorithm.

12. The device of one of claims 9 to 11, wherein
in the encoding unit, the encoding is a binary encoding, a floating-point encoding, and/or a symbol encoding.

13. The device of one of claims 9 to 12, wherein
the candidate generation unit is further configured to set a maximum value and a minimum value for the one or more candidate proportions of the components in the compound recipe.

14. A system for determining a target recipe of a compound, **characterized in that**, the system comprises:
a computer processor,
a computer-readable storage medium,
program instructions stored on the computer-readable storage medium that, when executed by the computer processor, execute the method of any one of claims 1 to 8.

15. A computer-readable storage medium having instructions thereon that, when executed by at least one processor, cause the at least one processor to execute the method of any one of claims 1 to 8.
